# EUROPÄISCHE PATENTSCHRIFT

(11) **EP 1 366 253 B1**
(45) Veröffentlichungstag und Bekanntmachung des Hinweises auf die Patenterteilung: **06.09.2006**
(21) Anmeldenummer: 02735106.3
(22) Anmeldetag: 27.02.2002
(51) Int. Cl.: E04G 21/04, B66C 23/78, G01L 1/16, E02F 9/08

(54) **MOBILES ARBEITSGERÄT MIT STANDSICHERHEITSÜBERWACHUNG**
MOBILE WORKING MACHINE PROVIDED WITH STABILITY MONITORING
APPAREIL DE TRAVAIL MOBILE COMPRENANT UN SYSTEME DE SURVEILLANCE DE STABILITE STATIQUE

(30) Priorität: 02.03.2001 DE 10110176
(43) Veröffentlichungstag der Anmeldung: 03.12.2003
(60) Teilanmeldung: 05028455.3
(73) Patentinhaber: PUTZMEISTER AKTIENGESELLSCHAFT, 72631 Aichtal (DE)
(72) Erfinder: PETZOLD, Wolf-Michael, 73773 Aichwald (DE); GELIES, Stephan, 39124 Magdeburg (DE); ALWES, Dieter, 72631 Aichtal (DE)
(74) Vertreter: Wolf, Eckhard
(86) Internationale Anmeldenummer: PCT/EP2002/002053
(87) Internationale Veröffentlichungsnummer: WO 2002/075076

(56) Entgegenhaltungen:
- EP-A- 0 531 828
- DE-A- 2 230 546
- DE-A- 2 436 849
- DE-A- 19 716 521
- DE-A- 19 857 298
- US-A- 3 713 129
- US-A- 4 546 658
- US-A- 4 833 615
- US-A- 5 557 526
- PATENT ABSTRACTS OF JAPAN vol. 008, no. 224 (M-331), 13. Oktober 1984 (1984-10-13) & JP 59 106351 A (MITSUBISHI DENKI KK), 20. Juni 1984 (1984-06-20)
- PATENT ABSTRACTS OF JAPAN vol. 2000, no. 21, 3. August 2001 (2001-08-03) & JP 2001 106480 A (IKENO TSUKEN KK), 17. April 2001 (2001-04-17)

## Beschreibung

Die Erfindung betrifft ein mobiles Arbeitsgerät, insbesondere eine Autobetonpumpe, mit einem Fahrgestell, mit zwei vorderen und zwei rückwärtigen, von einer Fahrstellung in mindestens eine Abstützstellung ausfahrbaren und mit je einem vorzugsweise teleskopierbaren Stützfuß auf einer Unterlage abstützbaren Stützauslegern, mit einem von einer Fahrstellung in über das Fahrgestell auskragende Arbeitsstellungen ausfahrbaren, um eine fahrgestellfeste Hochachse drehbaren, vorzugsweise als Betonverteilermast ausgebildeten Arbeitsausleger, mit im Bereich der Stützfüße angeordneten Messeinrichtungen zur Bestimmung der jeweiligen Stützlast und mit einer mit den Ausgangssignalen der Messeinrichtungen beaufschlagbaren Einrichtung zur Überwachung der Standsicherheit, wobei in jedem Stützfuß mindestens ein Kraftsensor angeordnet ist, wobei jeder Kraftsensor in einem elektrischen Messkreis zur Abgabe eines stützlastabhängigen Messsignals angeordnet ist und wobei die Überwachungseinrichtung eine Auswerteelektronik umfasst, die in vorgegebenen Abtastzyklen mit stützfußbezogenen Stützlast-Messwerten und zu deren Vergleich mit mindestens einem vorgegebenen stabilitätsbestimmenden Schwellenwert beaufschlagbar ist. Ein solches Arbeitsgerät ist in JP59 106 351 beschrieben.

Mobile Arbeitsgeräte dieser Art sind mit ausfahrbaren Stützauslegern versehen, die am Einsatzort die Standfestigkeit des Arbeitsgeräts verbessern sollen. Die Stützausleger haben dabei einerseits die Aufgabe, die Fahrzeugfederung zu eliminieren und die Räder zu entlasten. Zum anderen sollen die Stützausleger die Kippgefahr mindern, die sich ergibt, wenn über den Arbeitsausleger hohe Kippmomente entstehen. Die Stützfüße der Stützausleger bilden die Ecken eines Vierecks, dessen Seitenlinien eine Fläche umschreiben, innerhalb welcher der Gesamtschwerpunkt des Arbeitsgeräts liegen muss, um die Standsicherheit zu gewährleisten. Da der auskragende Arbeitsausleger drehbar ist, beschreibt der Gesamtschwerpunkt bei einer Drehung einen Vollkreis, der im Arbeitsbereich des Arbeitsauslegers innerhalb der Viereckfläche liegen muss. Da die Platzverhältnisse auf den Baustellen beengt sind, wird oft auf eine Vollabstützung verzichtet. Dadurch wird der Schwenkbereich des Arbeitsauslegers begrenzt. Um die Kippsicherung zu gewährleisten, wurde bereits eine Überwachungseinrichtung vorgeschlagen. Dort werden die in den vier hydraulisch betätigten Teleskopen der Stützbeine herrschenden Drücke überwacht. Lässt der Druck in zwei Stützbeinzylindern nach, so werden die Mastbewegung und die Betonpumpe abgeschaltet. Diese Technik lässt sich auch für den Fall nutzen, dass eine Maschine aus Platzgründen nicht voll abgestützt ist (Zeitschrift BETON 6/96, Seite 362, 364). Untersuchungen haben gezeigt, dass Druckmessungen in den Teleskopzylindem der Stützbeine für eine zuverlässige Stützbeinüberwachung nicht ausreicht. Dies gilt vor allem dann, wenn einer der Teleskopzylinder auf Anschlag gefahren ist. Auch dynamische Abstützeffekte lassen sich mit diesem Überwachungssystem nicht erfassen.

Ausgehend hiervon liegt der Erfindung die Aufgabe zugrunde, die Standsicherheitsüberwachung mobiler Arbeitsgeräte hinsichtlich ihrer Genauigkeit und Einsetzbarkeit in komplizierten Abstützsituationen zu verbessern.

Zur Lösung dieser Aufgabe werden die in den Patentansprüchen 1 und 7 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt primär der Gedanke zugrunde, dass die Auswerteelektronik eine Softwareroutine zur Ermittlung des zweitniedrigsten stützfußbezogenen Stützlast-Messwerts eines jeden Arbeitszyklus und zu dessen Vergleich mit einem stabilitätsbestimmenden Schwellenwert umfasst. Dabei wird der Erkenntnis Rechnung getragen, dass sich unter der Berücksichtigung der statischen Unbestimmtheit der Vierpunktabstützung regelmäßig eine Dreipunktabstützung einstellen wird, die bei einer Bewegung des Arbeitsauslegers zu wechselnden Abstützkonfigurationen führt. Einer der Stützbeine kann dabei sogar vom Untergrund abheben, ohne die Kippstabilität zu gefährden. Maßgeblich für die Standsicherheit ist gemäß der Erfindung stets der zweitniedrigste stützfußbezogene Stützlast-Messwert. Unterschreitet dieser eine Minimalkraft mit abnehmender Tendenz, so ist eine Notabschaltung der Auslegerbewegung und des Pumpbetriebs angezeigt. Der hierfür maßgebliche Sollwertgeber wird beispielsweise auf eine Minimalkraft von 0,5 bis 5 % der stützbeinbezogenen Maximalkraft eingestellt. Die Erfindung erlaubt es außerdem, vor dem Erreichen des genannten Gefahrenbereichs eine Vorwarnung zu geben. Dementsprechend wird ein weiterer Sollwertgeber zur Vorgabe einer Vorwamkraft vorgesehen, der beispielsweise bei 5 bis 10 % der stützbeinbezogenen Maximallast liegt und der dem Pumpenfahrer beispielsweise über ein akustisches und/oder optisches Signal anzeigt, dass eine erhöhte Aufmerksamkeit erforderlich ist. Grundsätzlich ist es möglich, die Überwachungseinrichtung auch unmittelbar zur Notabschaltung des Arbeitsauslegers und/oder der Betonpumpe zu verwenden.

Da es bei der Stabiltitätskontrolle vor allem auf einen Vergleich der gemessenen stützlastbezogenen Messwerte mit vorgegebenen Schwellenwerten ankommt, wird gemäß einer bevorzugten oder alternativen Ausgestaltung der Erfindung vorgeschlagen, dass die elektrischen Messkreise in einem Messbereich, der die Schwellenwerte umfasst, auf eine erhöhte Messgenauigkeit eingestellt sind. Da die stabilitätsbestimmenden Schwellenwerte eher am unteren Ende der Stützlastskala zu finden sind, ist es von Vorteil, wenn die elektrischen Messkreise eine von hohen zu niedrigen stützfußbezogenen Stützlasten hin zunehmende Messgenauigkeit aufweisen. Als besonders vorteilhaft hat es sich erwiesen, wenn die elektrischen Messkreise in einem Messbereich unterhalb 30 %, vorzugsweise unterhalb von 15 % der stützfußbezogenen Maximallast auf eine erhöhte Messgenauigkeit eingestellt sind.

Um einen Grundbruch zu vermeiden, kann es bei kritischen Bodenverhältnissen auch notwendig sein, einen oberen Schwellenwert einzuführen. Dieser Schwellenwert wird zweckmäßig so gewählt, dass bei gegebener Abstützfläche ein Grundbruch noch nicht eintritt.

Eine weitere bevorzugte Ausgestaltung der Erfindung sieht vor, dass der Kraftsensor in einem vorzugsweise nachträglich am Stützfuß befestigbaren Fußelement angeordnet ist. In diesem Fall kann auch der Messkreis und gegebenenfalls ein Teil der Auswerteelektronik im Fußelement integriert sein. Der Messkreis ist dabei bevorzugt über eine galvanische oder drahtlose Signalübertragungsstrecke mit der Auswerteelektronik gekoppelt.

Eine weitere bevorzugte Ausgestaltung der Erfindung sieht vor, dass in jedem Stützfuß zwei vorzugsweise gleichartige Kraftsensoren angeordnet sind, die in voneinander unabhängigen Messkreisen zur Abgabe eines stützlastabhängigen Messsignals angeordnet sind. Die Auswerteelektronik enthält dabei vorteilhafterweise eine Softwareroutine zum paarweisen Vergleich der aus den stützfußbezogenen Messsignalen abgeleiteten Messwerte hinsichtlich ihrer Übereinstimmung oder Nichtübereinstimmung. Nur wenn die zu den einzelnen Stützfüßen gehörenden Messwerte paarweise innerhalb eines vorgegebenen Toleranzbereichs gleich sind, ist eine Weiterverarbeitung innerhalb der Auswerteelektronik möglich. Die sich daraus ergebende Redundanz des Messsystems ist notwendig, um eine zuverlässige Überwachung der Geräteabstützung zu gewährleisten.

Die Kraftsensoren weisen zweckmäßig einen Dehnmessstreifen oder ein piezoelektrisches Element auf. Die elektrischen Messkreise enthalten vorteilhafterweise eine Brückenschaltung, in deren einem Zweig der zugehörige Kraftsensor angeordnet ist und deren Ausgang an einen Operationsverstärker angeschlossen ist.

Die erfindungsgemäße Anordnung erlaubt eine Echtzeitüberwachung der Stützlast im Bereich der einzelnen Stützfüße in einem engen Zeitraster, so dass auch dynamische Effekte und Trägheitseffekte beim Betrieb des Arbeitsgeräts in die Überwachung einbezogen werden können.

Im Folgenden wird die Erfindung anhand der in der Zeichnung dargestellten Ausführungsbeispiele näher erläutert. Es zeigen
- Fig. 1: eine Ansicht einer am Straßenrand abgestellten Autobetonpumpe mit auf der Straßenseite schmal abgestützten Stützauslegern;

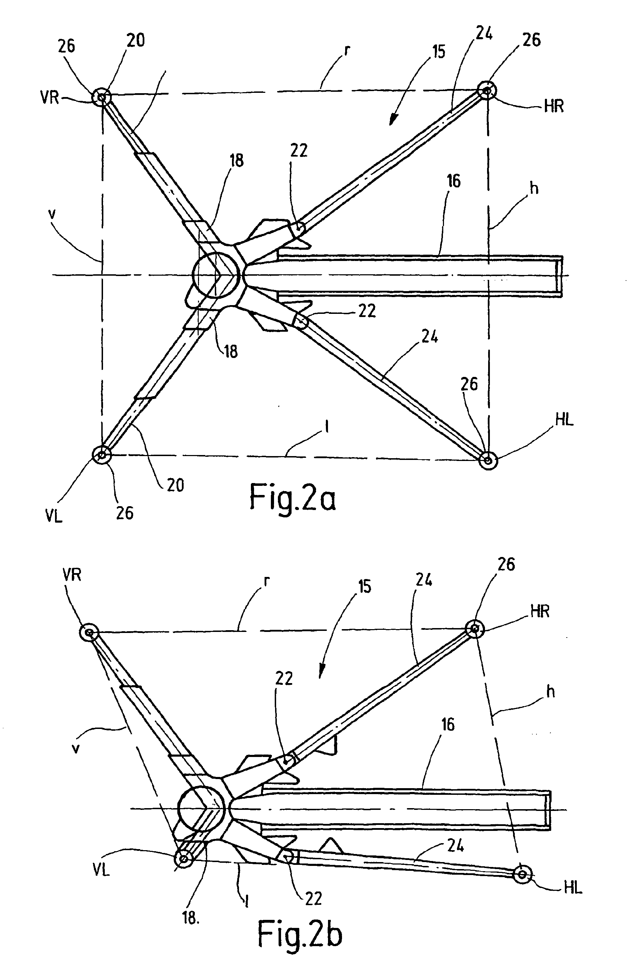

- Fig. 2a: und b eine Draufsicht auf die Stützkonstruktion der Autobetonpumpe nach Fig. 1 im Zustand der Vollabstützung und der einseitigen Schmalabstützung;
- Fig. 3a: eine Seitenansicht eines Stützfußes eines Stützauslegers mit angesetztem Stützlastsensor in geschnittener Darstellung;
- Fig. 3b: einen Schnitt durch einen Stützfuß eines Stützauslegers mit integriertem Stützlastsensor;
- Fig. 4a: ein Schema eines Stützfußes mit redundanten Stützlastsensoren;
- Fig. 4b: ein Schaltschema der redundanten Stützlastsensoren mit Auswerteelektronik.

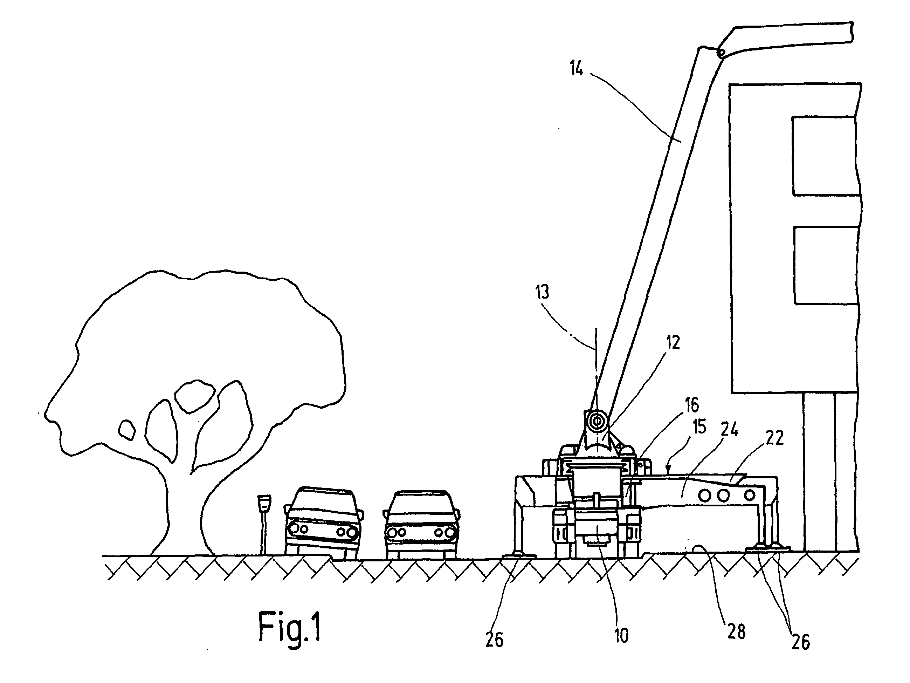

Die in Fig. 1 dargestellte fahrbare Betonpumpe besteht im Wesentlichen aus einem mehrachsigen Fahrgestell 10, einem an einem vorderachsnahen Mastbock 12 um eine fahrgestellfeste Hochachse 13 drehbar gelagerten Betonverteilermast 14 und einer Stützkonstruktion 15, die einen fahrgestellfesten Tragrahmen 16, zwei am Tragrahmen 16 in je einem als Ausschubkasten ausgebildeten Teleskopsegment 18 verschiebbare vorderer Stützausleger 20 und zwei um eine lotrechte Achse 22 verschwenkbare hintere Stützausleger 24 aufweist. Die Stützausleger 20,24 sind mit je einem nach unten ausfahrbaren Stützfuß 26 auf dem Untergrund 28 abstützbar. Die vorderen und rückwärtigen Stützausleger 20,24 sind mit hydraulischen Mitteln von einer fahrgestellnahen Fahrstellung in eine Abstützstellung ausfahrbar. Bei dem in Fig. 1 gezeigten Beispiel wurde auf der Straßenseite eine Schmalabstützung gewählt. Die Schmalabstützung, mit der den Platzproblemen auf Baustellen Rechnung getragen werden kann, führt zwangsläufig zu einer Einschränkung im Drehwinkel des Arbeitsauslegers 14.

Die vier auf dem Boden aufstehenden Stützfüße VL (vorne links), VR (vorne rechts), HL (hinten links) und HR (hinten rechts) spannen ein Viereck auf, dessen Seiten l, r, v und h (links, rechts, vorne und hinten) jeweils eine Kippkante bilden. Zur Gewährleistung der Standsicherheit dürfen die Viereckseiten beim Verfahren des Arbeitsauslegers vom Gesamtschwerpunkt des Systems nicht nach außen überschritten werden. Die Erfindung macht von der Erkenntnis Gebrauch, daß die Lage des Gesamtschwerpunkts innerhalb des Kippvierecks durch Stützlastsensoren an den die Ecken des Kippvierecks bildenden Stützfüßen 26 überwacht werden kann. Dementsprechend ist in jedem Stützfuß 26 eine Sensoreinheit 30 angeordnet, die zwei Kraftsensoren 32,34 mit zugehörigem elektrischem Meßkreis 36,38 und Operationsverstärker 40,42 umfasst. Jeder Meßkreis 36,38 gibt über seinen Verstärker 40,42 ein in vorgegebenen Zeitzyklen abtastbares stützlastabhängiges Meßsignal ab, das in einer zentralen Auswerteelektronik 54 verarbeitet wird.

Nur wenn die über die beiden Meßkreise 36,38 eines Stützfußes 26 ermittelten Meßwerte innerhalb einer vorgegebenen Fehlertoleranz übereinstimmen, werden sie einer weitergehenden Auswertung zugeführt. Dementsprechend enthält die Auswerteelektronik 54 eine Softwareroutine 60 zum paarweisen Vergleich der aus den stützfußbezogenen Meßsignalen abgeleiteten Meßwerte hinsichtlich ihrer Übereinstimmung. Wenn diese Übereinstimmung bei mehreren Abtastzyklen nicht gegeben ist, deutet dies auf einen Meß- oder Elektronikfehler hin, der zu einer Notabschaltung des Systems und damit zu einer Außerbetriebsetzung der Autobetonpumpe führt.

Eine weitere Besonderheit der Auswerteelektronik 54 besteht darin, daß sie eine Softwareroutine 62 zur Ermittlung des zweitniedrigsten stützfußbezogenen Stützlast-Meßwerts eines jeden Abtastzyklus und zu dessen Vergleich mit einem stabilitätsbestimmenden Schwellenwert umfaßt. Damit wird der Erkenntnis Rechnung getragen, daß eine Stützkonstruktion 15 mit vier Stützfüßen 26 statisch überbestimmt ist, so daß in jeder Konstellation des Arbeitsauslegers 14 nur drei der vier stützfußbezogenen Meßwerte für die Standsicherheit von Bedeutung sind. Die Standsicherheit ist grundsätzlich gegeben, wenn an drei Stützfüßen 26 noch eine Stützlast angreift, die eine vorgegebene Minimalkraft übersteigt. Nach dem Ausfahren der Stützausleger 20,24 ist im Normalfall in allen Stützfüßen 26 die gemessene Stützlast größer als eine vorgegebene Vorwarnkraft. Wird der Arbeitsausleger 14 bewegt, kann ein Stützfuß 26 ohne Stabilitätsrisiko sogar komplett vom Boden abheben. Eine Warnung (akustisch/optisch) wird erst ausgegeben, wenn die Stützlast an einem weiteren Stützfuß 26 unter die Vorwarnkraft absinkt. Wird der betreffende Stützfuß noch weiter entlastet und sinkt seine Stützlast unter die vorgegebene Minimalkraft, wird die Bewegung des Arbeitsauslegers 14 und der Betrieb der Betonpumpe durch Unterbrechung der Druckölzufuhr über ein Not-Aus-Ventil 56 abgeschaltet. In diesem Zustand kann der Bediener durch eine Notbetätigung, begleitet durch ein akustisches Hupsignal, den Arbeitsausleger 14 unter eigener Verantwortung aus dem Gefahrenbereich bergen. Auch eine Rundumleuchte 58 kann dem Bediener den Zustand der Vorwarnung anzeigen. Beim handbetätigten Bergevorgangs zeigt diese Rundumleuchte 58 durch Erlöschen an, daß die Stützlast in drei Stützfüßen 26 die Minimalkraft wieder überschritten hat.

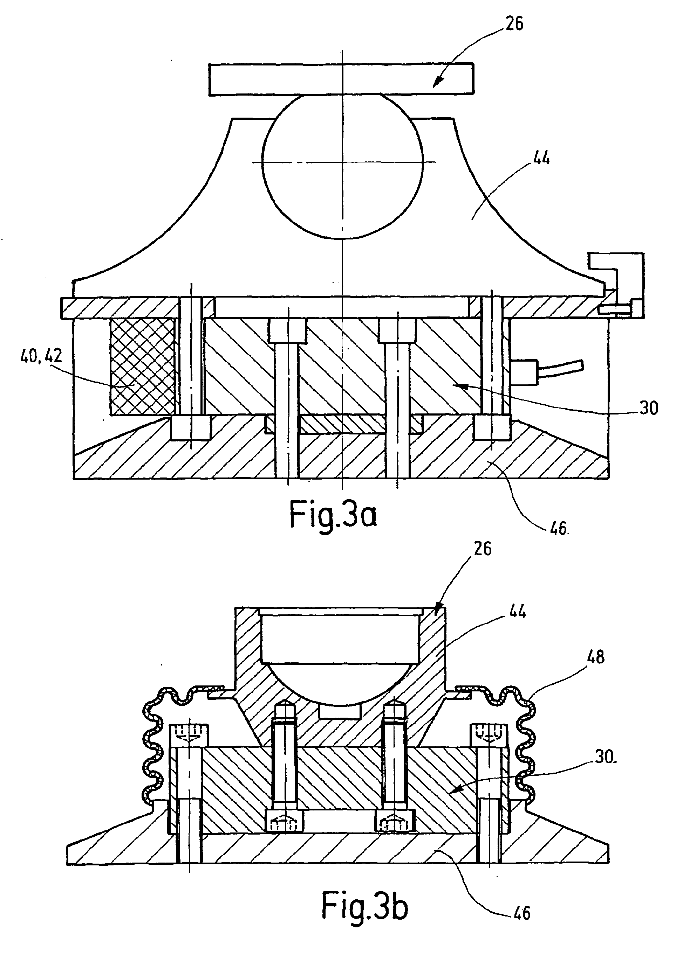

Wie aus Fig. 3a und b zu ersehen ist, ist die Sensoreinheit 30 zwischen einem Pendelfuß 44 des Stützfußes 26 und einem unmittelbar auf dem Boden aufstellbaren Fußteller 46 eingespannt. Dabei ist im Falle der Fig. 3a der Fußteller 46 mit Sensoreinheit 30 nachträglich an einem bereits vorhandenen Pendelfuß 44 des Stützfußes 26 befestigt, während im Falle der Fig. 3b eine den Pendelfuß 44 mit umfassende Konstruktion vorgesehen ist, die den ursprünglichen Pendelfuß ersetzt. Die Konstruktion nach Fig. 3b baut dementsprechend niedriger als die Konstruktion nach Fig. 3a und ist zudem durch eine Abdeckung 48 gegen Schmutzzutritt und Beschädigungen von außen geschützt.

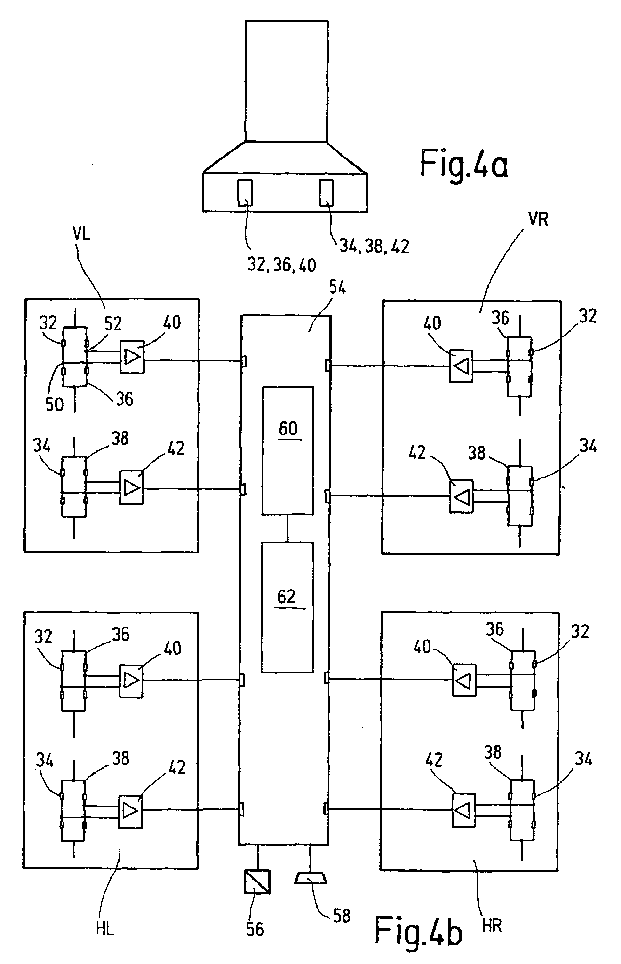

Wie aus Fig. 4b zu ersehen ist, sind die Meßkreise 36,38 als Wheatstonebrücken ausgebildet, an deren einem Zweig der als Dehnmeßstreifen ausgebildete Kraftsensor 32 bzw. 34 angeordnet ist. Die Diagonalabgriffe 50,52 der Meßkreise 36,38 sind an die Eingänge des zugehörigen Operationsverstärkers 40,42 angelegt, an dessen Ausgang das stützlast-proportionale elektrische Meßsignal abgreifbar ist. Der Meßbereich von 4 bis 20 mA am Ausgang der Verstärker 40,42 wird genutzt, um eine möglichst hohe Genauigkeit bei niedrigen Kraftwerten zu erhalten. Dementsprechend wird die Meßgenauigkeit durch entsprechende Einstellung des Verstärkers in einem Bereich erhöht, der etwa 20 % der an einem Stützfuß auftretenden Maximallast entspricht. Bei größeren Stützlasten wird stets der Maximalwert (z:B. 20 mA) am Verstärkerausgang abgegriffen.

Grundsätzlich ist es möglich, den Meßbereich der Meßkreise umzuschalten, so daß auch die Maximallast meßtechnisch erfaßt werden kann.

Zusammenfassend ist folgendes festzuhalten: Die Erfindung bezieht sich auf ein mobiles Arbeitsgerät, insbesondere eine Autobetonpumpe mit einer Einrichtung zur Überwachung der Standsicherheit im Betrieb. Das Arbeitsgerät weist ein Fahrgestell 10 auf, das eine Stützkonstruktion mit zwei vorderen und zwei rückwärtigen Stützauslegern 20 enthält. Die Stützausleger sind von einer Fahrstellung in mindestens eine Abstützstellung ausfahrbar und mit je einem teleskopierbaren Stützfuß 26 auf einer Unterlage 28 abstützbar. Das Arbeitsgerät weist ferner einen von einer Fahrstellung in über das Fahrgestell auskragende Arbeitsstellungen ausfahrbaren, um eine fahrgestellfeste Hochachse drehbaren, vorzugsweise als Betonverteilermast ausgebildeten Arbeitsausleger 14 auf. Im Bereich der Stützfüße sind Meßeinrichtungen zur Bestimmung der jeweiligen Stützlast angeordnet, deren Ausgangssignale einer Einrichtung zur Überwachung der Standsicherheit zugeleitet werden. Erfindungsgemäß ist in jedem Stützfuß mindestens ein Kraftsensor 32,34 angeordnet, der seinerseits in einem elektrischen Meßkreis 36,38 zur Abgabe eines stützlastabhängigen Meßsignals angeordnet ist. Die Überwachungseinrichtung umfaßt eine Auswerteelektronik 54, die in vorgegebenen Abtastzyklen mit den stützfußbezogenen Stützlast-Meßwerten und zu deren Vergleich mit mindestens einem vorgegebenen stabilitätsbestimmenden Schwellenwert beaufschlagbar ist.

## Patentansprüche

1. Mobiles Arbeitsgerät, insbesondere Autobetonpumpe, mit einem Fahrgestell (10), mit zwei vorderen und zwei rückwärtigen, von einer Fahrstellung in mindestens eine Abstützstellung ausfahrbaren und mit je einem teleskopierbaren Stützfuß (26) auf einer Unterlage (28) abstützbaren Stützauslegern (20), mit einem von einer Fahrstellung in über das Fahrgestell auskragende Arbeitsstellungen ausfahrbaren, um eine fahrgestellfeste Hochachse (13) drehbaren, vorzugsweise als Betonverteilermast ausgebildeten Arbeitsausleger (14), mit im Bereich der Stützfüße (26) angeordneten Messeinrichtungen (30) zur Bestimmung der jeweiligen Stützlast und mit einer mit den Ausgangssignalen der Messeinrichtungen beaufschlagbaren Einrichtung zur Überwachung der Standsicherheit, wobei in jedem Stützfuß (26) mindestens ein Kraftsensor (32,34) angeordnet ist, wobei jeder Kraftsensor in einem elektrischen Messkreis (36,38) zur Abgabe eines stützlastabhängigen Messsignals angeordnet ist und wobei die Überwachungseinrichtung eine Auswerteelektronik (54) umfasst, die in vorgegebenen Abtastzyklen mit stützfußbezogenen Stützlast-Messwerten und zu deren Vergleich mit mindestens einem vorgegebenen stabilitätsbestimmenden Schwellenwert beaufschlagbar ist, **dadurch gekennzeichnet, dass** die elektrischen Messkreise (36,38) eine von niedrigen nach hohen stützfußbezogenen Stützlast-Messwerten hin abnehmende Messgenauigkeit aufweisen.

2. Arbeitsgerät nach Anspruch 1, **dadurch gekennzeichnet, dass** die elektrischen Messkreise (36,38) in einem Messbereich unterhalb von 30 %, vorzugsweise unterhalb von 15 % der stützfußbezogenen Maximallast auf erhöhte Messgenauigkeit eingestellt sind.

3. Arbeitsgerät nach Anspruch 1 oder 2, **dadurch gekennzeichnet, dass** die Messgenauigkeit der elektrischen Messkreise (36,38) wahlweise umschaltbar ist.

4. Arbeitsgerät nach einem der Ansprüche 1 bis 3, **dadurch gekennzeichnet, dass** in jedem Stützfuß (26) zwei vorzugsweise gleichartige Kraftsensoren (32,34) angeordnet sind, die in voneinander unabhängigen Messkreisen (36,38) zur Abgabe eines stützlastabhängigen Messsignals angeordnet sind.

5. Arbeitsgerät nach Anspruch 4, **dadurch gekennzeichnet, dass** die Auswerteelektronik (54) eine Softwareroutine (60) zum paarweisen Vergleich der aus den stützfußbezogenen Messsignalen abgeleiteten Stützlast-Messwerte hinsichtlich ihrer Übereinstimmung aufweist.

6. Arbeitsgerät nach einem der Ansprüche 1 bis 5, **dadurch gekennzeichnet, dass** die Auswerteelektronik (54) eine Softwareroutine (62) zur Ermittlung des zweitniedrigsten stützfußbezogenen Stützlast-Messwerts eines jeden Abtastzyklus und zu dessen Vergleich mit einem stabilitätsbestimmenden Schwellenwert umfasst.

7. Mobiles Arbeitsgerät, insbesondere Autobetonpumpe, mit einem Fahrgestell (10), mit zwei vorderen und zwei rückwärtigen, von einer Fahrstellung in mindestens eine Abstützstellung ausfahrbaren und mit je einem teleskopierbaren Stützfuß (26) auf einer Unterlage (28) abstützbaren Stützauslegern (20), mit einem von einer Fahrstellung in über das Fahrgestell auskragende Arbeitsstellungen ausfahrbaren, um eine fahrgestellfeste Hochachse (13) drehbaren, vorzugsweise als Betonverteilermast ausgebildeten Arbeitsausleger (14), mit im Bereich der Stützfüße (26) angeordneten Messeinrichtungen (30) zur Bestimmung der jeweiligen Stützlast und mit einer mit den Ausgangssignalen der Messeinrichtungen beaufschlagbaren Einrichtung zur Überwachung der Standsicherheit, wobei in jedem Stützfuß (26) mindestens ein Kraftsensor (32,34) angeordnet ist, wobei jeder Kraftsensor in einem elektrischen Messkreis (36,38) zur Abgabe eines stützlastabhängigen Messsignals angeordnet ist und wobei die Überwachungseinrichtung eine Auswerteelektronik (54) umfasst, die in vorgegebenen Abtastzyklen mit stützfußbezogenen Stützlast-Messwerten und zu deren Vergleich mit mindestens einem vorgegebenen stabilitätsbestimmenden Schwellenwert beaufschlagbar ist, **dadurch gekennzeichnet, dass** die Auswerteelektronik (54) eine Softwareroutine (62) zur Ermittlung des zweitniedrigsten stützfußbezogenen Stützlast-Messwerts eines jeden Abtastzyklus und zu dessen Vergleich mit einem stabilitätsbestimmenden Schwellenwert umfasst.

8. Arbeitsgerät nach einem der Ansprüche 1 bis 7, **dadurch gekennzeichnet, dass** die Auswerteelektronik (54) eine Softwareroutine zur Ermittlung des höchsten stützfußbezogenen Stützlast-Messwerts eines jeden Abtastzyklus und zu dessen Vergleich mit einem stabilitätsbestimmenden Schwellenwert umfasst.

9. Arbeitsgerät nach einem der Ansprüche 1 bis 8, **dadurch gekennzeichnet, dass** die Auswerteelektronik (54) einen Schwellenwertgeber zur Vorgabe einer Minimalkraft aufweist.

10. Arbeitsgerät nach einem der Ansprüche 1 bis 9, **dadurch gekennzeichnet, dass** die Auswerteelektronik (54) einen Schwellenwertgeber zur Vorgabe einer Vorwamkraft aufweist.

11. Arbeitsgerät nach einem der Ansprüche 1 bis 10, **dadurch gekennzeichnet, dass** die Auswerteelektronik (54) einen Schwellenwertgeber zur Vorgabe einer Maximalkraft aufweist.

12. Arbeitsgerät nach einem der Ansprüche 1 bis 11, **dadurch gekennzeichnet, dass** die Auswerteelektronik (54) mit einer Steuereinrichtung (56) zur Ansteuerung des Arbeitsauslegers (14) verbunden ist.

13. Arbeitsgerät nach einem der Ansprüche 1 bis 12, **dadurch gekennzeichnet, dass** die Auswerteelektronik (54) mit einer Steuereinrichtung (56) zur Ansteuerung einer Betonpumpe verbunden ist.

14. Arbeitsgerät nach einem der Ansprüche 1 bis 13, **dadurch gekennzeichnet, dass** die Auswerteelektronik (54) mit einem akustischen und/oder optischen Signalgeber (58) verbunden ist.

15. Arbeitsgerät nach einem der Ansprüche 1 bis 14, **dadurch gekennzeichnet, dass** die Kraftsensoren (32,34) einen Dehnmessstreifen aufweisen.

16. Arbeitsgerät nach einem der Ansprüche 1 bis 15, **dadurch gekennzeichnet, dass** die Kraftsensoren (32,34) als piezoelektrische Sensoren ausgebildet sind.

17. Arbeitsgerät nach einem der Ansprüche 1 bis 16, **dadurch gekennzeichnet, dass** die elektrischen Messkreise (36,38) eine Brückenschaltung enthalten, in deren einem Zweig der zugehörige Kraftsensor (32,34) angeordnet ist.

18. Arbeitsgerät nach Anspruch 17, **dadurch gekennzeichnet, dass** die Messkreise (36,38) einen eingangsseitig mit Diagonalabgriffen (50,52) der Brückenschaltung verbundenen Operationsverstärker (40,42) enthalten.

19. Arbeitsgerät nach einem der Ansprüche 1 bis 18, **dadurch gekennzeichnet, dass** die Kraftsensoren (32,34) in einem vorzugsweise nachträglich am Stützfuß (26) befestigbaren Fußelement (44,46) angeordnet sind.

20. Arbeitsgerät nach Anspruch 19, **dadurch gekennzeichnet, dass** der mindestens eine Messkreis (36,38) in dem zugehörigen Fußelement (44,46) integriert ist.

21. Arbeitsgerät nach Anspruch 20, **dadurch gekennzeichnet, dass** der mindestens eine Messkreis (36,38) über eine galvanische oder drahtlose Übertragungsstrecke mit der Auswerteelektronik (54) gekoppelt ist.

## Claims

1. Mobile tool, in particular automobile concrete pump, with a chassis (10), with two front and two rear supporting jibs (20), which are extendable from a travelling position into at least one support position, and supportable on a base (28) by a telescopic supporting foot (26) in each case, with an operating jib (14), extendable from a travelling position into operating positions projecting over the chassis, rotatable about a vertical axis (13) fixed to the chassis and preferably constructed as a concrete distributor mast, with measuring devices (30) arranged in the area of the supporting feet (26) for determining the respective vertical bearing load and with a device which can be charged with the output signals of the measuring devices to monitor the stability, at least one force sensor (32, 34) being arranged in each supporting foot (26), wherein each force sensor is arranged in an electrical measuring circuit (36, 38) to emit a vertical-bearing-load-dependent measuring signal and wherein the monitoring device comprises analysis electronics (54) which are chargeable in preset scanning cycles with supporting-foot-related vertical bearing load measured values and for comparing them with at least one preset stability-determining threshold value, **characterised in that** the electrical measuring circuits (36, 38) have a measuring accuracy decreasing from low to high supporting-foot-related vertical bearing load measured values.

2. Tool according to claim 1, **characterised in that** the electrical measuring circuits (36, 38) are set to an increased measuring accuracy in a measuring range below 30%, preferably below 15% of the supporting-foot-related maximum load.

3. Tool according to claim 1 or 2, **characterised in that** the measuring accuracy of the electrical measuring circuits (36, 38) can be optionally reversed.

4. Tool according to one of claims 1 to 3, **characterised in that** in each supporting foot (26) are arranged two force sensors (32, 34), preferably of identical type, arranged in measuring circuits (36, 38), independent of one another, to emit a vertical-bearing-load-dependent measuring signal.

5. Tool according to claim 4, **characterised in that** the analysis electronics (54) have a software routine (60) for comparison in pairs of the vertical-bearing-load measured values derived from the supporting-foot-related measuring signals in respect of matching.

6. Tool according to one of claims 1 to 5, **characterised in that** the analysis electronics (54) have a software routine (62) for detecting the second lowest supporting-foot-related vertical bearing load measured value of each scanning cycle and for comparing it with a stability-determining threshold value.

7. Mobile tool, in particular automobile concrete pump, with a chassis (10), with two front and two rear supporting jibs (20), which can be extended from a travelling position into at least one support position and are supportable on a base (28) by a telescopic supporting foot (26) in each case, with an operating jib (14), extendable from a travelling position into operating positions projecting over the chassis, rotatable about a vertical axis (13) fixed to the chassis and preferably constructed as a concrete distributor mast (14), with measuring devices (30) arranged in the area of the supporting feet (26) for determining the respective vertical bearing load and with a device which can be charged with the output signals of the measuring devices to monitor the stability, at least one force sensor (32, 34) being arranged in each supporting foot (26), wherein each force sensor is arranged in an electrical measuring circuit (36, 38) to emit a vertical-bearing-load-dependent measuring signal and wherein the monitoring device comprises analysis electronics (54) which are chargeable in preset scanning cycles with supporting-foot-related vertical bearing load measured values and for comparing them with at least one preset stability-determining threshold value, **characterised in that** the analysis electronics (54) comprise a software routine (63) for detecting the second lowest supporting-foot-related vertical bearing load measured value of each scanning cycle and for comparing them with a stability-determining threshold.

8. Tool according to one of claims 1 to 7, **characterised in that** the analysis electronics (54) comprise a software routine for detecting the highest supporting-foot-related vertical bearing load measured value of each scanning cycle and for comparing it with a stability-determining threshold value.

9. Tool according to one of claims 1 to 8, **characterised in that** the analysis electronics (54) have a threshold value generator for presetting a minimum force.

10. Tool according to one of claims 1 to 9, **characterised in that** the analysis electronics (54) have a threshold value generator for presetting a pre-warning force.

11. Tool according to one of claims 1 to 10, **characterised in that** the analysis electronics (54) have a threshold value generator for presetting a maximum force.

12. Tool according to one of claims 1 to 11, **characterised in that** the analysis electronics (54) are connected to a control device (56) for actuating the operating jib (14).

13. Tool according to one of claims 1 to 12, **characterised in that** the analysis electronics (54) are connected to a control device (56) for actuating a concrete pump.

14. Tool according to one of claims 1 to 13, **characterised in that** the analysis electronics (54) are connected to an acoustic and/or optical signal generator (58).

15. Tool according to one of claims 1 to 14, **characterised in that** the force sensors (32, 34) have a strain gauge.

16. Tool according to one of claims 1 to 15, **characterised in that** the force sensors (32, 34) are constructed as piezoelectric sensors.

17. Tool according to one of claims 1 to 16, **characterised in that** the electrical measuring circuits (36, 38) contain a bridge circuit, in one branch of which the associated force sensor (32, 34) is arranged.

18. Tool according to claim 17, **characterised in that** the measuring circuits (36, 38) contain an operational amplifier (40, 42) connected on one side to diagonal taps (50, 52) of the bridge circuit.

19. Tool according to one of claims 1 to 18, **characterised in that** the force sensors (32, 34) are arranged in a foot element (44, 46), preferably subsequently fastened to the supporting foot (26).

20. Tool according to claim 19, **characterised in that** the at least one measuring circuit (36, 38) is integrated in the associated foot element (44, 46).

21. Tool according to claim 20, **characterised in that** the at least one measuring circuit (36, 38) is coupled to the analysis electronics (54) via a galvanic or wireless transmission route.

## Revendications

1. Appareil de travail mobile, en particulier pompe à béton automotrice, avec un châssis (10), avec deux béquilles (20) avant et deux arrière, déployables d'une position de roulement ou de route dans au moins une position d'appui et pouvant s'appuyer chacune sur un support (28) par un pied d'appui (26) télescopique, avec un bras de travail (14) déployable d'une position de route dans des positions de travail en saillie ou en porte-à-faux par rapport au châssis, pivotant autour d'un axe vertical (13) lié au châssis, réalisé de préférence sous forme de mât de distribution de béton, avec des dispositifs de mesure (30) disposés au niveau des pieds d'appui (26) pour déterminer la charge d'appui respective et avec un dispositif pouvant être soumis aux signaux de sortie des dispositifs de mesure pour surveiller la stabilité, au moins un capteur de force (32, 34) étant disposé dans chaque pied d'appui (26), chaque capteur de force étant disposé dans un circuit électrique de mesure (36, 38) conçu pour délivrer un signal de mesure dépendant de la charge d'appui et le dispositif de surveillance comprenant une électronique d'évaluation (54) qui peut être soumise, à des cycles d'échantillonnage prédéfinis, aux valeurs de mesure de charge d'appui relatives aux béquilles et, pour leur comparaison, à au moins une valeur seuil prédéfinie déterminante pour la stabilité, **caractérisé par le fait que** les circuits électriques de mesure (36, 38) présentent une précision de mesure décroissante des basses vers les hautes valeurs de mesure de charge d'appui relatives aux béquilles.

2. Appareil de travail selon la revendication 1, **caractérisé par le fait que** les circuits électriques de mesure (36, 38) sont réglés sur une précision de mesure plus élevée dans une plage de mesure au-dessous de 30 %, de préférence au-dessous de 15 % de la charge maximale par béquille.

3. Appareil de travail selon la revendication 1 ou 2, **caractérisé par le fait que** la précision de mesure des circuits électriques de mesure (36, 38) est commutable au choix.

4. Appareil de travail selon l'une des revendications 1 à 3, **caractérisé par le fait que** deux capteurs de force (32, 34) de préférence de même nature sont disposés dans chaque pied d'appui (26) et situés dans des circuits de mesure (36, 38) indépendants conçus pour délivrer un signal de mesure dépendant de la charge d'appui.

5. Appareil de travail selon la revendication 4, **caractérisé par le fait que** l'électronique d'évaluation (54) contient une routine logicielle (60) pour la comparaison par paires des valeurs de mesure déduites des signaux de mesure relatifs aux béquilles en ce qui concerne leur coïncidence.

6. Appareil de travail selon l'une des revendications 1 à 5, **caractérisé par le fait que** l'électronique d'évaluation (54) comprend une routine logicielle (62) pour déterminer la deuxième plus faible valeur de mesure de charge d'appui relative aux béquilles de chaque cycle d'échantillonnage et la comparer avec une valeur seuil déterminante pour la stabilité.

7. Appareil de travail mobile, en particulier pompe à béton automotrice, avec un châssis (10), avec deux béquilles (20) avant et deux arrière, déployables d'une position de roulement ou de route dans au moins une position d'appui et pouvant s'appuyer chacune sur un support (28) par un pied d'appui (26) télescopique, avec un bras de travail (14) déployable d'une position de route dans des positions de travail en porte-à-faux par rapport au châssis, pivotant autour d'un axe vertical (13) lié au châssis, réalisé de préférence sous forme de mât de distribution de béton, avec des dispositifs de mesure (30) disposés au niveau des pieds d'appui (26) pour déterminer la charge d'appui respective et avec un dispositif pouvant être soumis aux signaux de sortie des dispositifs de mesure pour surveiller la stabilité, au moins un capteur de force (32, 34) étant disposé dans chaque pied d'appui (26), chaque capteur de force étant disposé dans un circuit électrique de mesure (36, 38) conçu pour délivrer un signal de mesure dépendant de la charge d'appui et le dispositif de surveillance comprenant une électronique d'évaluation (54) qui peut être soumise, à des cycles d'échantillonnage prédéfinis, aux valeurs de mesure de charge d'appui relatives aux béquilles et, pour leur comparaison, à au moins une valeur seuil prédéfinie déterminante pour la stabilité, **caractérisé par le fait que** l'électronique d'évaluation (54) comprend une routine logicielle (62) pour déterminer la deuxième plus faible valeur de mesure de charge d'appui relative aux béquilles de chaque cycle d'échantillonnage et la comparer avec une valeur seuil déterminante pour la stabilité.

8. Appareil de travail selon l'une des revendications 1 à 7, **caractérisé par le fait que** l'électronique d'évaluation (54) comprend une routine logicielle pour déterminer la valeur de mesure de charge d'appui relative aux béquilles la plus élevée de chaque cycle d'échantillonnage et la comparer avec une valeur seuil déterminante pour la stabilité.

9. Appareil de travail selon l'une des revendications 1 à 8, **caractérisé par le fait que** l'électronique d'évaluation (54) présente un transmetteur de valeur seuil pour fixer une force minimale.

10. Appareil de travail selon l'une des revendications 1 à 9, **caractérisé par le fait que** l'électronique d'évaluation (54) présente un transmetteur de valeur seuil pour fixer une force d'avertissement.

11. Appareil de travail selon l'une des revendications 1 à 10, **caractérisé par le fait que** l'électronique d'évaluation (54) présente un transmetteur de valeur seuil pour fixer une force maximale.

12. Appareil de travail selon l'une des revendications 1 à 11, **caractérisé par le fait que** l'électronique d'évaluation (54) est reliée à un dispositif de commande (56) pour la commande du bras de travail (14).

13. Appareil de travail selon l'une des revendications 1 à 12, **caractérisé par le fait que** l'électronique d'évaluation (54) est reliée à un dispositif de commande (56) pour la commande d'une pompe à béton.

14. Appareil de travail selon l'une des revendications 1 à 13, **caractérisé par le fait que** l'électronique d'évaluation (54) est reliée à un transmetteur de signaux acoustiques et/ou optiques (58).

15. Appareil de travail selon l'une des revendications 1 à 14, **caractérisé par le fait que** les capteurs de force (32, 34) présentent une jauge de contrainte.

16. Appareil de travail selon l'une des revendications 1 à 15, **caractérisé par le fait que** les capteurs de force (32, 34) sont réalisés sous la forme de capteurs piézoélectriques.

17. Appareil de travail selon l'une des revendications 1 à 16, **caractérisé par le fait que** les circuits électriques de mesure (36, 38) contiennent un circuit en pont dans une branche duquel le capteur de force (32, 34) associé est disposé.

18. Appareil de travail selon la revendication 17, **caractérisé par le fait que** les circuits électriques de mesure (36, 38) contiennent un amplificateur opérationnel (40, 42) relié côté entrée aux sorties diagonales (50, 52) du circuit en pont.

19. Appareil de travail selon l'une des revendications 1 à 18, **caractérisé par le fait que** les capteurs de force (32, 34) sont disposés dans un élément de pied (44, 46) pouvant de préférence être fixé après coup sur le pied d'appui (26).

20. Appareil de travail selon la revendication 19, **caractérisé par le fait que** ledit au moins un circuit de mesure (36, 38) est intégré dans l'élément de pied associé.

21. Appareil de travail selon la revendication 20, **caractérisé par le fait que** ledit au moins un circuit de mesure (36, 38) est couplé à l'électronique d'évaluation (54) par une ligne de transmission galvanique ou sans fil.
